(19) Europäisches Patentamt
European Patent Office
Office européen des brevets

(11) **EP 2 119 141 B1**

(12) **FASCICULE DE BREVET EUROPEEN**

(45) Date de publication et mention
de la délivrance du brevet:
**11.11.2015 Bulletin 2015/46**

(51) Int Cl.:
***H04L 12/801*** *(2013.01)*     ***H04L 12/853*** *(2013.01)*
*H04L 1/18* *(2006.01)*

(21) Numéro de dépôt: **07872036.4**

(22) Date de dépôt: **28.12.2007**

(86) Numéro de dépôt international:
**PCT/FR2007/052630**

(87) Numéro de publication internationale:
**WO 2008/087364 (24.07.2008 Gazette 2008/30)**

(54) **PROCEDE DE TRANSMISSION/RECEPTION EN TEMPS REEL DE DONNEES PAR PAQUETS ENTRE UN SERVEUR ET UN TERMINAL CLIENT, SERVEUR ET TERMINAL CORRESPONDANTS**

VERFAHREN FÜR ECHTZEIT-ÜBERTRAGUNG/-EMPFANG VON DATEN IN PAKETEN ZWISCHEN EINEM SERVER UND EINEM CLIENT-ENDGERÄT SOWIE ENTSPRECHENDER SERVER UND ENDGERÄT

METHOD OF REAL-TIME TRANSMISSION/RECEPTION OF DATA IN PACKETS BETWEEN A SERVER AND A CLIENT TERMINAL, CORRESPONDING SERVER AND TERMINAL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **09.01.2007 FR 0700129**

(43) Date de publication de la demande:
**18.11.2009 Bulletin 2009/47**

(73) Titulaire: **TDF**
**92120 Montrouge (FR)**

(72) Inventeurs:
• **VINCENT, David**
**F-35150 Amanlis (FR)**
• **GANTHIER, Philippe**
**F-35410 Nouvoitou (FR)**
• **CANNIEUX, Laurent**
**F-35150 Corps-nuds (FR)**

(74) Mandataire: **Cabinet Plasseraud**
**52, rue de la Victoire**
**75440 Paris Cedex 09 (FR)**

(56) Documents cités:
**EP-A1- 1 211 856     EP-B1- 1 397 899**
**JP-A- 2004 186 737**

**Description**

L'invention concerne un procédé de transmission/réception en temps réel de données par paquets, entre un serveur et un terminal client, un serveur et un terminal correspondants.

Le transfert de flux de données en temps réel, flux isochrones de type audio, vidéo, est de plus en plus souvent effectué en utilisant des flux, notamment flux IP pour Internet Protocol en anglais, par fibre optique, satellite, ou liaison ADSL par exemple.

La présente invention a pour objet de fiabiliser le transfert de données sur des liaisons par paquet, notamment de type IP, dans le cas d'une transmission essentiellement en temps réel, lorsque le débit de transmission est imposé par le serveur d'application, application telle que radio, vidéo par exemple.

Les protocoles actuellement utilisables pour l'acheminement des données en temps réel sont de deux types :

les protocoles en mode connecté, de type TCP pour Transmission Control Protocol en anglais, et en mode non connecté, de type UDP pour User Datagram Protocol en anglais.

En mode connecté, le protocole TCP prévoit un acquittement de chaque réception de paquet de données. Ce protocole a fait l'objet d'une description détaillée dans le document « TCP : Transmission Control Protocol » RFC 793, Septembre 1981.

En outre, le protocole DCP pour Distribution and Communications Protocol en anglais, a été défini dans le cadre du projet DRM pour Digital Radio Mondial, projet de numérisation des ondes longues, moyennes et courtes. DCP a fait l'objet d'une description détaillée dans la norme ETSI, European Télécommunications Standards Institute en anglais, référencée TS 102821.

En mode non connecté, le protocole UDP ne permet que l'adressage des paquets. Il a fait l'objet d'une description détaillée dans le document intitulé « User Datagram Protocol, RDC 768, Août 1980.

Le protocole DCP sur UDP possède des indices de continuité du flux, lesquels permettent de détecter les pertes de paquets de données. Ce protocole a fait l'objet d'une description détaillée dans le document intitulé Distribution and Communication Protocol également référencé ETSI, TS 102821. Défini dans le cadre du projet DRM, il permet de protéger, de façon optionnelle, les données transmises par une fragmentation associée à un code de Reed Solomon.

Le protocole RTP pour Real-time Transport Protocol en anglais, est un protocole de transmission en continu mettant en oeuvre un compteur de continuité permettant de détecter les paquets de données perdues. Mis en oeuvre en association avec le protocole RTCP pour Real Time Control Protocol en anglais, il permet également d'estimer la qualité de la liaison.

Les protocoles précités sont définis dans les documents ci-après :

- « RTP : A Transport Protocol for Real Time Applications », STD 64, RFC 3550, juillet 2003 ;
- « RTP: A Transport Protocol for Real-Time Applications », RFC 1889, janvier 1996.

A titre d'exemple, la demande JP 2004 186737 décrit un système de communication se basant uniquement sur le protocole RTP, dans lequel la retransmission de paquets RTP est requise, côté récepteur, en fonction d'un numéro de séquence inséré dans le paquet RTP.

La demande EP 1 211 856, pour sa part, décrit un procédé utilisant également l'insertion d'un numéro de séquence dans des paquets transmis, afin de détecter des paquets perdus et d'éventuellement envoyer une requête de retransmission de paquet en cas de détection de paquets perdus.

Les protocoles de l'art antérieur précités présentent des inconvénients.

En mode connecté, le principal inconvénient est que ces protocoles nécessitent une liaison bidirectionnelle rapide, afin d'acquitter chacun des paquets de données reçu. Cette contrainte est incompatible avec des liaisons monodirectionnelles, telles que liaison satellite ou fibre optique.

En particulier, le transport d'un flux en temps réel par le protocole TCP présente plusieurs inconvénients lors d'une coupure de la liaison :

- une coupure supérieure au délai d'attente réseau, désigné "timeout" en anglais, nécessite un temps de reconnexion important ;
- le temps de reconstitution de la mémoire
- tampon pour plusieurs trames de paquets de données, utilisée par le terminal client pour compenser la gigue du réseau, s'additionne au temps de coupure ;
- lors de la reprise de la connexion, si le « timeout » n'a pas été dépassé, le serveur envoie toutes les données qu'il n'a pu transmettre, y compris les données obsolètes, ce qui retarde la reprise de la transmission utile.

Le protocole précité nécessite une connexion et une réplication du flux pour chaque terminal client, car il ne permet pas la diffusion en mode multicast. Il nécessite donc des ressources importantes tant au niveau serveur qu'au niveau réseau.

En mode non connecté, le protocole UDP ne garantit pas la livraison des paquets et ne possède aucun mode de protection contre les erreurs.

Le protocole DCP/UDP, protocole DCP associé au protocole UDP, assure avec un comptage de continuité une protection contre les erreurs. Toutefois, cette protection reste très faible, car elle permet de corriger un maximum de 20% des paquets transmis. Cette protection étant constituée d'une fragmentation des paquets transmis, associée à un code de Reed Solomon.

Le protocole RTP, bien que permettant de détecter les paquets perdus et d'estimer la qualité de liaison, ne permet pas de recouvrer les données perdues.

La présente invention a pour objet de fiabiliser la transmission de données en temps réel transportées par tout flux IP, en remédiant aux inconvénients des protocoles connus de l'état de la technique, par la correction des coupures de liaison plus longues que pour le protocole DCP/UDP, en l'absence des inconvénients du protocole TCP.

En particulier, l'invention a pour objet un procédé de transmission en temps réel de données par paquets entre un serveur et un terminal client dans lequel la longueur, en durée, des ruptures de liaison susceptibles d'être corrigées est fonction, d'une part, de la taille de la mémoire utilisée comme mémoire tampon, tant côté serveur d'application que côté terminal client, et, d'autre part, du temps de liaison entre le serveur et le terminal client.

Un autre objet de la présente invention est, en outre, la mise en oeuvre d'un procédé de transmission/réception en temps réel de données par paquets, incluant une fonction de répétition des paquets émis, seule une rupture de transmission plus longue en durée que la capacité ou durée de répétition étant observée au niveau du terminal client, cette rupture apparaissant alors égale à la longueur en durée de la coupure de liaison, diminuée de la capacité de répétition.

Enfin, un autre objet de la présente invention est la mise en oeuvre d'un procédé de transmission/réception en temps réel de données par paquets entre serveur et terminal client, permettant de conserver un flux compatible avec des équipements de réception clients qui ne gèrent pas la demande de répétition des paquets.

Le procédé de transmission/réception en temps réel de données par paquets en réseau IP entre un serveur et un terminal client, objet de l'invention, est remarquable en ce qu'il consiste au moins à, côté serveur, affecter à chaque paquet à transmettre un index de continuité d'émission, transmettre successivement chacun des paquets selon le protocole UDP et leur index de continuité selon le protocole DCP vers le terminal client, et, côté terminal client, détecter toute rupture du flux de paquets reçus à partir des index de continuité associés à chaque paquet reçu, et, sur détection d'une discontinuité de flux, transmettre du terminal client au serveur au moins une requête de réémission d'au moins un paquet manquant, tant que ce au moins un paquet manquant n'a pas été reçu par ce terminal client.

Le procédé objet de l'invention est, en outre, remarquable en ce qu'il consiste, côté serveur et côté terminal client, à mémoriser en continu une même pluralité de paquets successifs, à l'exception prés des paquets non reçus du côté terminal client, chaque paquet étant mémorisé et accompagné de son index de continuité.

Le procédé objet de l'invention est également remarquable en ce que l'étape de détection de toute rupture de continuité est effectuée par analyse du seul flux DCP.

Le procédé de l'invention est, en outre, remarquable en ce que l'étape consistant à mémoriser en continu consiste à mémoriser chaque paquet de la pluralité de paquets successifs dans une mémoire, par exemple une mémoire tampon de type FIFO.

Selon un autre aspect remarquable du procédé, objet de l'invention, la taille de la mémoire précitée en nombre de paquets est fonction des paramètres de transmission du réseau de transmission des paquets.

Selon un autre aspect remarquable du procédé, objet de l'invention, la taille de la mémoire précitée est adaptative. Ceci permet d'optimiser la compensation de ruptures de transmission, au temps aller et retour près, entre le terminal client et le serveur.

Le procédé, objet de l'invention, est également remarquable en ce que la transmission des informations, nécessaire au client pour effectuer des demandes de répétition, est effectuée par transmission d'information incluant au moins l'adresse de destination de toute requête de réémission de paquets, la taille mémoire de la mémoire de la pluralité de paquets successifs.

Le procédé objet de l'invention est, en outre, remarquable en ce que l'étape consistant à transmettre du terminal client au serveur une requête de réémission d'au moins un paquet est exécutée selon le protocole UDP/IP.

Selon un autre aspect remarquable du procédé, objet de l'invention, chaque requête de réémission inclut au moins l'identification et l'adresse de destination du paquet ou des paquets à réémettre.

Le procédé, objet de l'invention, est enfin remarquable en ce que l'étape consistant à transmettre successivement chacun des paquets est effectuée par transmission en mode unicast ou multicast.

Le serveur de transmission/réception de données par paquets en réseau IP entre ce serveur et un terminal client, objet de l'invention, est remarquable en ce qu'il comporte au moins, outre des ressources d'émission de paquets de données constitutifs d'au moins un flux d'émission selon le protocole UDP, un module générateur et de transmission de données de signalisation de continuité des paquets de données émis, un module de mémorisation d'une suite d'un nombre de paquets de données successifs envoyés pour au moins un flux de données transmises et un module de réception et de traitement de requêtes de réémission de paquets de données encore présents dans le module de mémorisation de la suite d'un nombre de paquets de données successifs, le module de réception et de traitement des requêtes de répétition commandant le module de mémorisation et d'émission en mode unicast ou multicast et lesdits moyens générateurs et de transmission de données de signalisation en mode DCP.

Le terminal client adapté pour la réception de flux de données par paquets en réseau IP selon le protocole UDP, accompagnées de données de signalisation de continuité de flux selon le protocole DCP, objet de la présente invention, est remarquable en ce qu'il comporte, en outre, un module de détection des ruptures de flux par analyse des données de signalisation de continuité, un module de mémorisation d'une suite d'un nombre de paquets de données successifs reçus pour au moins un flux de données, un module de transmission de requêtes de réémission de données à une adresse spécifique, lesdits moyens de transmission de requêtes de réémission opérant selon le protocole UDP/IP et un module de réordonnancement des paquets reçus dans le module de mémorisation d'une suite d'un nombre de paquets de données successifs reçus, compte tenu des paquets transmis en réémission.

La présente invention vise également un message d'information pour la transmission de données par paquets en réseau IP entre un serveur et un terminal client, ce message d'information étant formé par une étiquette DCP, comportant au moins un numéro de port UDP où transmettre les requêtes de réémission de paquets dont la discontinuité de transmission a été révélée, une adresse IP où transmettre les requêtes de réémission de paquets et la taille de la mémoire en nombre de trames/paquets mémorisés successivement transmis.

La présente invention vise par ailleurs une requête de réémission de paquets transmis par un terminal client vers un serveur de transmission de données par paquets en réseau IP, cette requête contenant au moins une identification du ou des paquets de données à réémettre et l'adresse où doit être renvoyée ledit ou lesdits paquets.

La présente vise en outre un programme d'ordinateur mémorisé sur un support de mémorisation d'un ordinateur ou d'un appareil dédié constitutif d'un serveur de transmission/réception de données par paquets en réseau IP entre ce serveur et un terminal client, et tel que, lors de l'exécution de ses instructions, ledit programme d'ordinateur exécute les étapes d'affectation à chaque paquet à transmettre d'un index de continuité d'émission et de transmission successive de chacun des paquets selon le protocole UDP et de leur index de continuité selon le protocole DCP vers ce terminal client selon le procédé de transmission/réception décrit ci-avant.

La présente vise également un programme d'ordinateur mémorisé sur un support de mémorisation d'un ordinateur constitutif d'un terminal client de transmission/réception de données par paquets en réseau IP transmis selon le protocole UDP entre ce terminal client et un serveur, et tel que, lors de son exécution, ledit programme d'ordinateur exécute les étapes de détection de toute rupture de continuité de flux de paquets reçus à partir de leur index de continuité reçu selon le protocole DCP, et, sur détection d'une discontinuité de flux, la transmission du terminal client audit serveur d'au moins une requête de réémission d'au moins un paquet manquant, tant que ce ou ces paquets manquants ne sont pas reçus par ce terminal client.

Ces différents objets seront mieux compris à la lecture de la description et à l'observation des dessins ci-après dans lesquels :

- la figure 1 représente, à titre illustratif, un organigramme général des étapes de mise en oeuvre du procédé de transmission/réception en temps réel de données par paquets entre un serveur et un terminal client, objet de la présente invention ;
- la figure 2a représente, à titre illustratif, un schéma fonctionnel de l'architecture d'un serveur de transmission/réception de données par paquets en réseau IP conforme à l'objet de la présente invention ;
- la figure 2b représente, à titre illustratif, un schéma fonctionnel du mode opératoire du serveur objet de l'invention, tel que représenté en figure 2a ;
- la figure 3a représente, à titre illustratif, un schéma fonctionnel de l'architecture d'un terminal client adapté pour la réception/transmission de données par paquets en réseau IP conforme à l'objet de l'invention ;
- la figure 3b représente, à titre illustratif, un schéma fonctionnel du mode opératoire du terminal client objet de l'invention, représenté en figure 3a ;
- la figure 4a représente, à titre illustratif, la structure d'un message d'information pour la transmission de données par paquets en réseau IP en utilisant le protocole DCP entre un serveur et un terminal client, conforme à l'objet de l'invention ;
- la figure 4b représente, à titre illustratif, la structure d'un message de requête de réémission de paquets transmis, en utilisant le protocole DCP, par un terminal client représenté en figure 3a, 3b vers un serveur tel que représenté en figure 2a, 2b, conformément à l'objet de l'invention.

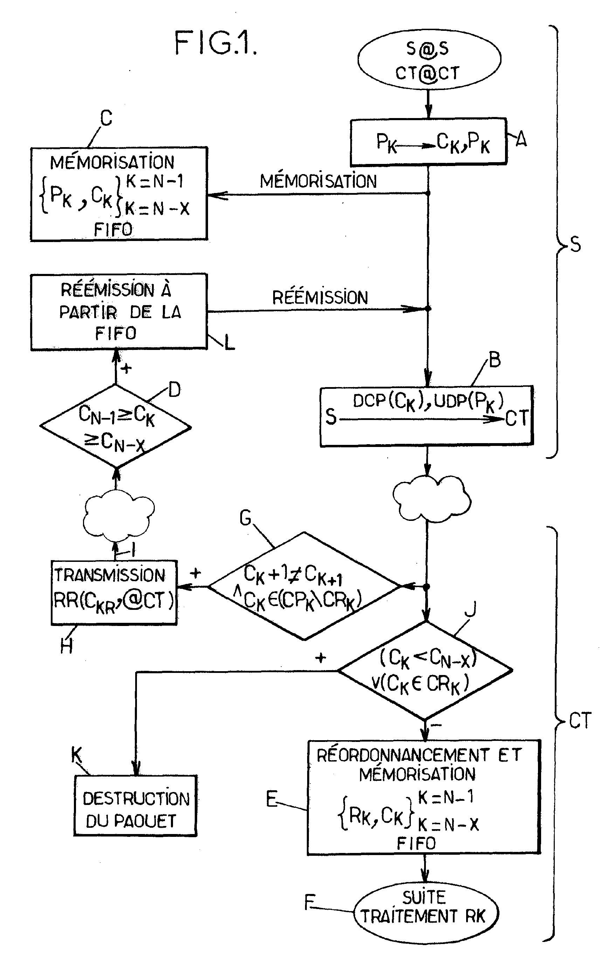

Une description plus détaillée du procédé de transmission en temps réel de données par paquets en réseau IP entre un serveur S et un terminal client CT, conformes à l'objet de la présente invention, sera maintenant donnée en liaison avec la figure 1 et les figures suivantes.

D'une manière générale, on considère que le serveur S est accessible par l'intermédiaire du réseau IP par son adresse @S ainsi que le terminal client CT par l'intermédiaire de son adresse @CT.

Le procédé, selon l'invention, consiste au moins, côté serveur S, à affecter en une étape 1, à chaque paquet à transmettre, un index de continuité d'émission noté $C_k$.

L'opération est notée à l'étape A de la figure 1 par la relation

$$P_k \rightarrow C_k, P_k.$$

Dans cette relation $C_k$ indique l'index de continuité d'émission attribué au paquet de données à transmettre $P_k$.

D'une manière plus spécifique, on indique que l'index de continuité $C_k$ attribué à chaque paquet de données $P_k$ peut être constitué par une valeur numérique croissante, en fonction du rang du paquet émis, et constitue ainsi une suite de données de signalisation de continuité des paquets de données émis.

A titre d'exemple non limitatif, on indique que chaque valeur d'index de continuité $C_k$ peut être calculée à partir d'une fonction monotone croissante du rang de chaque paquet par exemple. Ce type d'opération est connu de l'état de la technique et pour cette raison ne sera pas décrit en détails.

L'étape A est suivie de deux étapes simultanées B et C. L'étape B consiste à transmettre successivement chacun des paquets $P_k$ et leur index de continuité $C_k$ vers le terminal client CT par l'intermédiaire de l'adresse @CT de ce dernier. L'étape C consiste à mémoriser chacun des paquets $P_k$ et leurs index de continuité $C_k$ dans la mémoire du terminal serveur S.

A l'étape B de la figure 1, l'opération de transmission est notée :

$$S \xrightarrow{DCP(C_k), UDP(P_k)} CT.$$

Dans la relation précédente :

- DCP $(C_k)$ désigne la transmission de chaque index de continuité $C_k$ de préférence, mais de manière non limitative, selon le protocole DCP ; et
- UDP $(P_k)$ désigne la transmission de chaque paquet $P_k$ de manière préférentielle, mais non limitative, selon le protocole UDP.
- Chaque paquet $P_k$ peut être transmis avec son index de continuité $C_k$ ou bien séparément de celui-ci.

A l'étape C, l'opération de mémorisation, est représentée par la relation :

Mémorisation $\left\{ P_k C_k \right\}_{k=N-X}^{k=N-1}$ où N-X et N-1 désignent les rangs des paquets successifs et les valeurs d'index de continuité correspondantes mémorisées au niveau du terminal serveur S.

Selon un mode de mise en oeuvre préférentiel non limitatif du procédé objet de l'invention, l'étape de mémorisation représentée à l'étape C côté serveur S peut avantageusement être exécutée par l'intermédiaire d'une mémoire, par exemple une mémoire tampon de type FIFO ou une mémoire cache, dont la taille est adaptée à la mémorisation des paquets successifs $P_k$ transmis côté serveur S ainsi que des index de continuité $C_k$ qui leur ont été associés lors de l'étape A.

Suite aux étapes A , B et C de la figure 1 exécutées au niveau du serveur S, le procédé, objet de l'invention, consiste côté terminal client CT à exécuter deux étapes simultanées G et J. L'étape G consistant à détecter toute rupture de continuité de flux de paquets reçus $P_k$ à partir des index de continuité associés à chaque paquet reçu ainsi que de s'assurer que le paquet reçu $P_k$ n'est pas un paquet réémis afin de ne pas prendre en compte la rupture de continuité générée par la réception des paquets répétés.

A l'étape G, l'opération consistant à détecter toute rupture de continuité de flux de paquets reçus est notée de manière symbolique :

$$C_k + 1 \neq C_{k+1} ?$$

Par cette notation, on comprend que l'opération de détection consiste, à partir de la fonction monotone inverse par exemple utilisée à l'émission, à vérifier que l'index de continuité de rang k+1 noté $C_{k+1}$ a été reçu après réception de la valeur d'index de continuité $C_k$ et donc immédiatement après le paquet $P_k$, la notion d'immédiateté postérieure de la réception étant notée symboliquement par $C_k+1$.

On comprend ainsi que l'étape G, exécutée côté terminal client CT, de détection de toute rupture de continuité est effectuée par analyse du seul flux DCP permettant la transmission des index de continuité au niveau du terminal client CT.

A l'étape G, l'opération consistant à vérifier que le paquet reçu n'est pas un paquet réémis sur demande est notée de manière symbolique :

$$C_k \in (CP_k \setminus CR_k)$$

Par cette notation, on comprend que l'opération de vérification consiste, à vérifier que l'index de continuité du paquet reçu $C_k$ n'appartient pas à l'ensemble des identifiants des paquets perdus lors de la transmission. Cet ensemble est défini comme l'ensemble des paquets émis par le terminal serveur $CP_k$ moins l'ensemble des indices de continuité des paquets déjà présents dans la mémoire du terminal client CT : $CR_k$.

Sur détection d'une discontinuité de flux réel, c'est-à-dire lorsque les conditions testées à l'étape G sont vérifiées, alors il existe après réception de l'index de continuité $C_k$, désigné index de continuité de rupture $C_{kr}$, une discontinuité de flux. La discontinuité de flux peut concerner plusieurs paquets non reçus, de valeur d'index de continuité noté $\{C_{k+1}, \ldots, C_{k+p}\}$ par exemple. Le procédé de l'invention consiste en une étape H à transmettre du terminal client CT au serveur S, par l'intermédiaire du retour représenté en ligne pointillée à l'étape I, une requête de réémission notée à l'étape H :

RR ($C_{kr}$, @CT) vers le serveur S c'est-à-dire à l'adresse @S de ce dernier.

Cette opération de retour à étape I et de transmission de la requête précitée est effectuée tant que le ou les paquets manquants $C_{k+1}$, $C_{k+p}$ n'a ou n'ont pas été reçus par le terminal client CT et tant que le ou les paquets manquants $C_{k+1}$, $C_{k+p}$ ne sont pas obsolètes, c'est-à-dire que l'indice de continuité $C_{kr}$ du paquet à réémettre reste compris entre $C_{N-1}$ et $C_{N-X}$, les indices de continuité bornant les indices de continuité des paquets présents dans la mémoire du terminal client.

L'étape de retour I symbolisée par la flèche en pointillés revient à l'étape D au niveau du serveur S.

L'étape J du terminal client, simultanée à l'étape G, consiste à analyser l'indice de continuité du paquet reçu $C_k$ afin de détecter les paquets déjà reçus et mémorisés ainsi que les paquets non obsolètes.

A l'étape J les opérations consistant à vérifier la validité des paquets reçus est notée de manière symbolique :

$$(C_k < C_{N-X}) \vee (C_k \in CR_k)$$

Par cette notation, on comprend qu'un paquet est considéré comme inutile si son indice de continuité $C_k$ est plus ancien que l'indice de continuité du plus ancien paquet mémorisé du coté terminal client $C_{N-X}$ ou si l'indice de continuité du paquet reçu appartient déjà a l'ensemble $CR_k$ des indices de continuité des paquets déjà mémorisés du coté terminal client.

Sur réponse positive aux tests de l'étape J le paquet inutile sera détruit à l'étape K.

Bien entendu, sur réponse négative aux tests de l'étape J de la figure 1, le procédé objet de l'invention consiste en une étape E d'ordonnancement puis de mémorisation du paquet de données $R_k$ reçu.

L'opération de mémorisation correspondante est représentée par la relation :

Mémorisation $\left\{ R_k C_k \right\}_{k=N-X}^{k=N-1}$ où N-X et N-1 désignent les rangs des paquets successifs et les valeurs d'index de continuité correspondantes mémorisées au niveau du terminal client CT.

Selon un mode de mise en oeuvre préférentiel non limitatif du procédé objet de l'invention, l'étape de mémorisation représentée à l'étape E côté terminal client CT peut avantageusement être exécutée par l'intermédiaire d'une mémoire, par exemple une mémoire tampon de type FIFO ou une mémoire cache, dont la taille est adaptée à la mémorisation des paquets successifs $R_k$ reçus côté terminal client et des index de continuité $C_k$ leur correspondant.

L'étape E terminée, c'est-à-dire que le paquet sort de la mémoire, par exemplede type FIFO, utilisée à l'étape E, le paquet poursuit le processus de traitement symbolisé par l'étape F.

L'étape D côté terminal serveur correspond à l'analyse de la requête de demande de répétition envoyée par le terminal client CT au terminal serveur S. L'étape D consiste à détecter si le ou les paquets identifiés dans la requête de réémission sont encore présents dans la mémoire du serveur. Cette détection peut être notée de manière symbolique :

$$C_{N-1} \geq C_K \geq C_{N-X}$$

Par cette notation, on comprend que l'opération consiste, à vérifier que l'index de continuité de rang k désignant le paquet à répéter doit être compris entre l'index de continuité $C_N$ du dernier paquet ajouté à la FIFO et l'index de continuité $C_{N-X}$ du paquet le plus anciennement ajouté à la FIFO.

Sur réponse négative au test de l'étape D de la figure 1, le procédé objet de l'invention consiste à ignorer la requête envoyée par le client CT au terminal serveur S.

Sur réponse positive au test de l'étape D de la figure 1, le procédé objet de l'invention consiste en une étape L de réémission des paquets désignés dans la requête transmise lors de l'étape I par le terminal client CT au terminal serveur S. Selon un mode de mise en oeuvre préférentiel non limitatif du procédé objet de l'invention, l'étape de réémission représentée à l'étape L côté serveur S peut avantageusement être exécutée par recherche des paquets à réémettre dans la mémoire utilisée dans l'étape C puis à retransmettre ces mêmes paquets par l'intermédiaire de l'étape B du terminal client CT.

Afin de permettre l'exécution fluide de la mise en oeuvre du procédé objet de l'invention, celui-ci consiste, ainsi que représenté sur la figure 1 côté terminal client CT, d'une part, et côté serveur S, d'autre part, à mémoriser en continu une même pluralité de paquets successifs à transmettre respectivement reçus accompagnés de leur index de continuité.

Les opérations correspondantes sont représentées à l'étape C au niveau du serveur S respectivement à l'étape E au niveau du terminal client CT.

Le fonctionnement général et le mode opératoire du procédé objet de l'invention, tel que représenté en figue 1 est alors le suivant, lorsque le protocole UDP permettant la transmission des paquets successifs $P_k$ et le protocole DCP permettant la transmission les index de continuité $C_k$ sont utilisés.

L'une des voies achemine le flux en temps réel du serveur S vers le terminal client CT par le protocole UDP et l'autre voie permet au terminal client CT d'envoyer au serveur S spécifié dans le flux les requêtes de réémission de paquets par l'intermédiaire du protocole UDP.

Les index de continuité contenus par le flux transmis par le protocole DCP sont utilisés pour détecter les ruptures de flux côté terminal client CT.

Lorsque ce dernier détecte une rupture de continuité de transmission des paquets $P_k$, il demande alors la réémission des paquets non reçus en envoyant une requête au serveur S, la requête RR ($C_k$r,@CT) précédemment mentionnée à l'étape H de la figure 1. Le serveur S retransmet alors les paquets manquants.

Dans le but de conserver la continuité du flux en temps réel, la mémorisation des données reçues côté terminal client CT dans l'attente de la réception des paquets perdus, ainsi que la mémorisation des données transmises côté serveur S, permet d'obtenir la continuité précitée.

Cette opération est exécutée grâce à la mise en oeuvre de mémoires, par exemple de mémoires tampon de type FIFO, tant côté serveur S, que côté terminal client CT.

Selon une caractéristique du procédé objet de l'invention, la mémoire utilisée, tant côté serveur S que côté terminal client CT, peut être définie du point de vue de sa taille en nombre de paquets et fonction des paramètres de transmission du réseau de transmission des paquets considérés.

D'une manière plus spécifique, la taille de la mémoire utilisée, côté serveur S et côté terminal client CT, peut alors être rendue adaptative dans le but particulièrement avantageux d'optimiser la compensation de rupture de transmission de paquets de données successifs, au temps de transmission aller-retour près entre le terminal client CT et le serveur S, ainsi qu'il sera décrit ultérieurement dans la description.

On indique toutefois que le choix de la taille de la mémoire utilisée coté terminal client influe sur le temps de retard introduit à la réception.

A titre d'exemple non limitatif, la taille de la mémoire peut être déterminée en fonction du temps de transmission aller-retour précité entre le serveur S et le terminal client CT et de la taille maximum des ruptures de transmission que l'on souhaite pouvoir corriger. Le temps de transmission aller retour entre le terminal client et le terminal serveur peut être mesuré par des opérations classiques côté serveur par exemple, par émission de commandes appropriées, lesquelles ne seront pas décrites plus en détails pour cette raison.

D'une manière plus spécifique, on indique que la transmission des informations, nécessaire au client pour effectuer les demandes de répétition, entre le serveur S et le terminal client CT est effectuée par transmission d'une étiquette DCP d'information. Cette étiquette peut inclure au moins l'adresse de destination de toute requête de réémission de paquets c'est-à-dire l'adresse @S du serveur S, la taille mémoire de la mémoire de mémorisation de la pluralité de paquets successifs.

Ainsi que mentionné précédemment dans la description, cette taille mémoire peut être déterminée au niveau du serveur S de manière adaptative puis configurée au niveau du terminal client considéré CT.

Enfin, en ce qui concerne la transmission du terminal client au serveur S d'une requête de réémission d'au moins un paquet, cette opération représentée à l'étape I de la figure 1, est avantageusement exécutée selon le protocole UDP/IP.

Bien entendu, chaque requête de réémission inclut l'identifiant du premier paquet à réémettre, c'est-à-dire l'index de continuité $C_k r$ pour lequel la rupture a été détectée, le nombre de paquets à réémettre, ainsi que l'adresse de destination du ou des paquets à réémettre c'est-à-dire l'adresse @CT du terminal client CT.

Pour ce qui concerne l'étape consistant à transmettre successivement chacun des paquets $P_k$, celle-ci peut être avantageusement effectuée par transmission par mode unicast ou même en mode multicast.

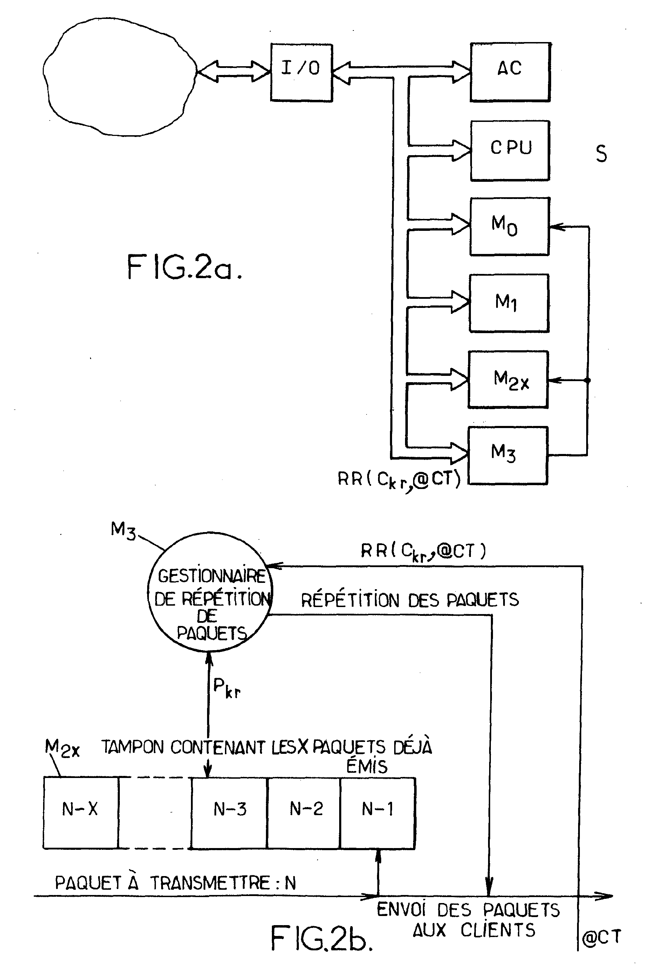

Une description plus détaillée d'un serveur de transmission de données par paquets en réseau IP et un terminal client permettant la mise en oeuvre du procédé objet de la présente invention, sera maintenant donnée en liaison avec les figures 2a et 2b, respectivement 3a et 3b.

En référence à la figure 2a, on indique que le serveur de transmission de données par paquets en réseau IP objet de l'invention, serveur S, entre ce serveur et un terminal client CT, comporte de manière classique des organes d'entrée/sortie notés I/O, une unité centrale de traitement CPU, un module de contrôle d'accès AC au serveur permettant de gérer toute requête du point de vue accès et sécurité à un service ou application transmis par ce serveur S.

L'ensemble est géré par un module de programmes $M_0$ permettant notamment d'assurer la fonction serveur pour une ou plusieurs applications considérées. Le module de programmes $M_0$ permet, notamment, de gérer la transmission de paquets de données $P_k$ constitutive d'au moins un flux d'émission pour une application considérée.

Outre les éléments de type classique précités, le serveur de transmission de données par paquets en réseau IP objet de l'invention, comporte un module $M_1$ générateur de transmission de données de signalisation de continuité des paquets de données $P_k$ émis.

Le module $M_1$ précité peut être constitué par un module logiciel exécutant par exemple la fonction monotone croissante permettant de calculer les valeurs successives d'index de continuité $C_k$ attribué à chacun des paquets $P_k$ émis.

En outre, ainsi que représenté en figure 2a, il comporte un module de mémorisation $M_2 x$ d'une suite d'un nombre de paquets de données successifs envoyés pour au moins un flux de données transmises, la mémorisation étant exécutée de préférence par la mémorisation des paquets $P_k$ sur un nombre X de paquets selon la relation représentée à l'étape C de la figure 1.

Enfin, le serveur S objet de l'invention, comprend un module $M_3$ de réception et de traitement de requêtes de réémission de paquets de données $P_k$ encore présents dans le module de mémorisation $M_2 x$ de la suite d'un nombre de paquets de données successifs $P_k$.

Le module de mémorisation $M_2 x$ est constitué de préférence par une mémoire, par exemple une mémoire tampon de type FIFO, dont la taille définit la capacité de réémission du serveur S en nombre de paquets de données, et, bien entendu, en durée de réémission.

Le module $M_3$ de réception et de traitement des requêtes précité est avantageusement constitué par un module logiciel permettant de traiter le message de requête précédemment décrit dans la description. Le module de réception et de traitement $M_3$ commande les ressources d'émission de paquets et le module $M_{2x}$ contenant les paquets nécessaires à la réémission.

En outre, ainsi que mentionné précédemment dans la description, le module $M_3$, de réception et de traitement des requêtes, commande le module d'émission des paquets $P_k$ successifs qui doivent être réémis, soit en mode unicast, soit en mode multicast.

Le mode opératoire du serveur S objet de l'invention représenté en figure 2a, sera maintenant décrit en liaison avec la figure 2b.

Le serveur S a pour rôle :

- d'insérer dans le flux des données de signalisation que le terminal client CT utilise pour transmettre des requêtes de réémission de paquets $P_k$ ;
- de conserver dans la mémoire tampon, mémoire FIFO, une partie du flux déjà envoyé. On indique de manière particulièrement avantageuse qu'une seule mémoire est nécessaire par flux émis par le serveur, et, cela quel que soit le nombre de terminaux client TC recevant le flux considéré ;
  La taille de la mémoire $M_2 x$ détermine en fait la capacité de réémission du serveur S. Plus la mémoire est importante en taille et plus les ruptures de liaison pouvant être corrigées sont alors importantes.
  A titre d'exemple non limitatif, si le serveur S et le terminal client CT stockent par exemple 10 secondes de flux de paquets de données transmis et que la liaison aller + retour entre le terminal client CT et le serveur S nécessitent 2 secondes, alors il est possible de corriger sans perte des ruptures de transmission allant jusqu'à 8 secondes ;
- de traiter les demandes de réémission de paquets $P_k$ envoyées par les terminaux client CT et de réémettre les paquets encore présents dans la mémoire située au niveau du terminal serveur.

Dans le cas d'une émission multicast, des paquets encore présents dans la mémoire tampon, si plusieurs terminaux CT redemandent le même paquet, le serveur peut réémettre les données en mode multicast au lieu de les réémettre pour chaque terminal client CT.

Le mode opératoire précité et représenté en figure 2b où $M_3$ représente le module de réception et de traitement des requêtes de réémission de paquets de données, constitué en un gestionnaire de répétition des paquets sous forme d'un logiciel adapté. Le module $M_3$ précité commande en particulier la mémoire $M_2x$ pour lecture de l'indice ou index de continuité des paquets ou le cas échéant, des paquets eux-mêmes à réémettre et commande également le module de réémission des paquets $M_0$.

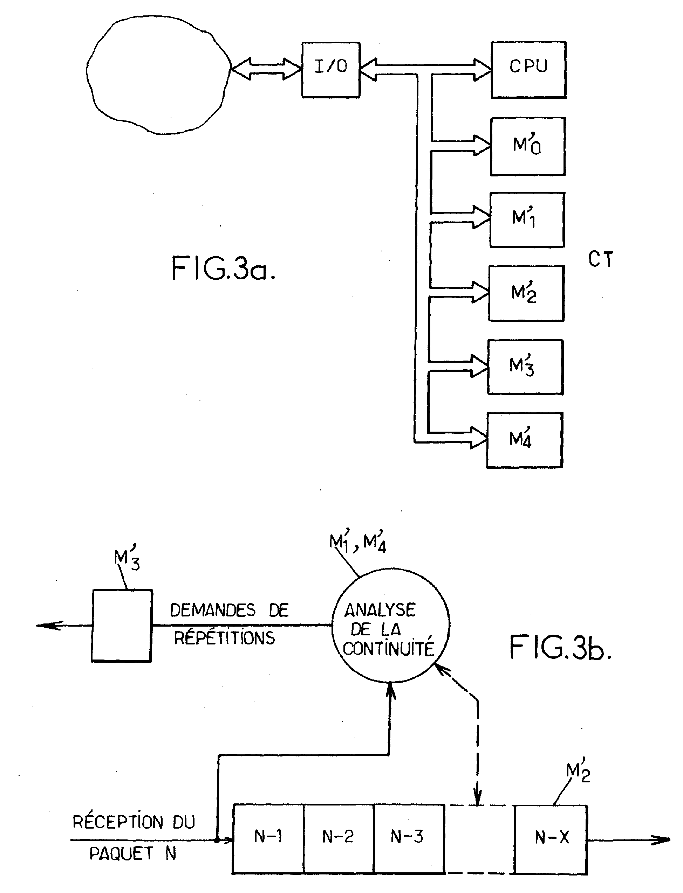

Une description plus détaillée d'un terminal client conforme à l'objet de l'invention et adapté pour la réception de flux de données par paquet en réseau IP accompagné de données de signalisation de continuité de flux émises par un serveur S tel que représenté en figures 2a et 2b sera maintenant donnée en liaison avec les figures 3a et 3b.

Ainsi que représenté sur la figure 3a, le terminal client CT objet de l'invention, comporte de manière classique une unité d'entrée/sortie I/O connectée à une unité centrale de traitement CPU laquelle pilote une mémoire de program-mes $M'_0$ permettant de gérer les échanges de données entre tout terminal client CT et tout terminal ou serveur connecté au réseau IP.

Le terminal CT objet de l'invention, comporte en outre de manière particulièrement avantageuse, un module $M'_1$ de détection des ruptures de flux par analyse des données de signalisation de continuité, le module $M'_1$ précité opérant, ainsi que décrit précédemment dans la description, en liaison avec la figure 1 aux étapes G et J. Ce module peut être constitué par un module logiciel exécuté par l'unité centrale CPU.

Il comporte en outre un module $M'_2x$ de mémorisation d'une suite d'un nombre de paquets de données successifs reçus pour au moins un flux de données déterminé. Le module $M'_2x$ constitue la mémoire précédemment décrite dans la description et mise en oeuvre dans l'étape E de la figure 1.

Il comporte également ainsi que représenté sur la même figure 3a un module $M'_3$ de transmission de requêtes de réémission de paquets de données à une adresse spécifique à l'adresse du serveur @S précédemment décrite dans la description. Le module $M'_3$ permet de construire les messages de requête de réémission RR ($C_{kr}$, @CT) précédemment décrit en liaison avec la figure 1.

Enfin, le terminal client CT objet de l'invention, comporte un module $M'_4$ de réordonnancement des paquets reçus dans le module de mémorisation $M'_2x$ de la suite de nombre de paquets de données successifs reçus, compte tenu des paquets transmis en réémission.

Selon un aspect remarquable du terminal client CT objet de l'invention, le module $M'_3$ de transmission de requêtes de réémission opère selon le protocole UDP/IP pour assurer la transmission des requêtes de réémission précitées.

Le mode opératoire du terminal client CT sera maintenant décrit en liaison avec la figure 3b.

Le terminal client CT a pour objet :

- de détecter des ruptures dans le flux en analysant les index de continuité ainsi que décrit en liaison avec la figure 1 à l'étape G ;
- d'envoyer des requêtes de répétition à l'adresse spécifiée dans le flux, c'est-à-dire à l'adresse @S précédemment décrite en liaison avec la figure 1. Ces requêtes de répétition utilisent avantageusement le protocole UDP/IP, ce protocole n'assurant pas la bonne réception des requêtes, ces dernières doivent être répétées jusqu'à réception des paquets demandés ou obsolescence des données manquantes. La fréquence de répétition des requêtes de réémission peut alors être déterminée en fonction du type de réseau et des qualités intrinsèques de ce dernier ;
- de mémoriser dans la mémoire les données c'est-à-dire les paquets successifs $R_k$ reçus par le terminal client et leurs index de continuité afin d'assurer la continuité du flux en temps réel. Après une rupture de la transmission du flux de données, la mémoire utilisée au niveau du terminal client CT est rapidement reconstituée, avec un débit très supérieur à celui strictement utile pour acheminer les paquets de données sans erreur;
- de réordonnancer les paquets reçus dans la mémoire car les paquets répétés sont reçus avec retard. En cas de répétitions multiples, le terminal client CT doit en outre supprimer les paquets déjà reçus.

Un diagramme représentant le mode opératoire du terminal client. CT est représenté à la figure 3b où les modules $M'_1$ et $M'_4$ constitués par des modules logiciels permettent d'assurer l'analyse de la continuité du flux. Les modules précités permettent de réorganiser la succession des paquets mémorisés dans le module de mémorisation $M'_2x$ et bien entendu de commander les demandes de répétitions par l'intermédiaire du module $M'_3$.

Pour la mise en oeuvre du procédé du serveur S et du terminal client CT, objets de la présente invention, tels que décrits précédemment dans la description, on indique que ces derniers sont d'autant plus efficaces que le réseau de transmission de type IP supporte des débits supérieurs, au moins momentanément, aux débits utilisés pour le transport des paquets de données $P_k$ ceci dans le but de retransmettre les paquets perdus avant que la mémoire du terminal client CT ne soit vide.

En outre, le retard induit par la mise en place de la mémoire, au niveau du serveur S et du terminal client CT, est mutualisé avec le retard de la mémoire utilisée pour absorber la gigue du réseau de transmission IP.

Si la taille de la mémoire du serveur S est spécifiée dans le flux de transmission de données ce qui, conformément à l'objet de l'invention, est réalisé, et, en particulier, de manière adaptative, le terminal client CT est alors en mesure d'adapter la taille de sa mémoire à une taille sensiblement identique, ou le cas échéant légèrement inférieure, afin de tenir compte du délai de réémission des paquets de données non reçus.

Le terminal client CT peut alors automatiquement s'adapter aux types de flux de données reçus. En détectant dans le flux de paquets de données transmis des informations identifiant la source de répétition, c'est-à-dire le serveur S par exemple, le terminal client CT précité active automatiquement l'option de répétition des paquets perdus. Sinon, dans le cas contraire, ce dernier adopte alors le fonctionnement utilisant le protocole DCP standard.

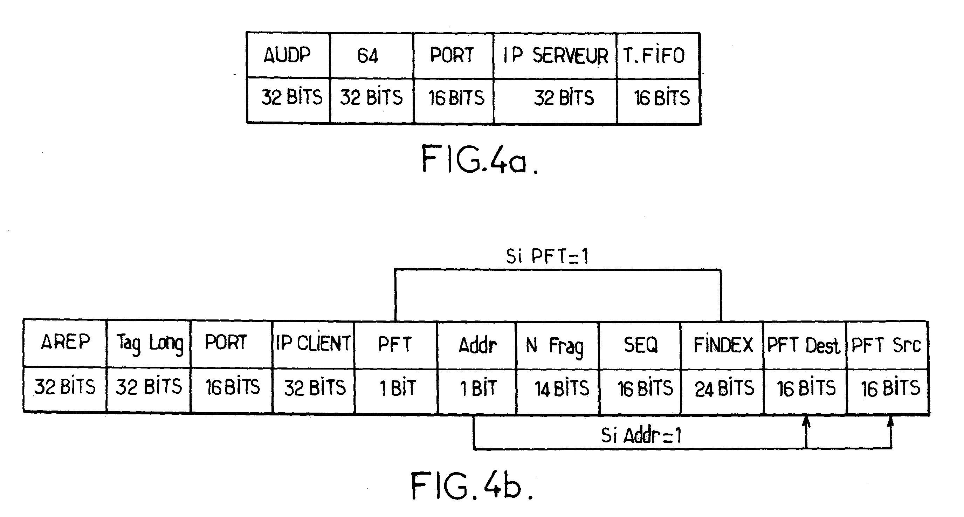

Une description plus détaillée d'un message d'information pour la transmission de données par paquets en réseau IP entre le serveur S et un terminal client CT précédemment décrits dans la description, sera maintenant donnée en liaison avec la figure 4a.

En référence à la figure 4a précitée, on indique que le message d'information permettant la transmission des données d'information de continuité du flux est formé par une étiquette DCP telle que représentée sur la figure 4a par exemple.

L'étiquette précitée comporte au moins un nom d'étiquette selon un champ devant être codé sur 4 octets « AUDP » par exemple, ce nom correspondant à un champ obligatoire de la norme DCP.

L'étiquette DCP doit en outre comporter, ainsi que représenté aux dessins de la figure 4a, un champ de longueur d'étiquette lequel donne la longueur de l'étiquette en bits. L'étiquette a une longueur constante de 64 bits selon le champ obligatoire de la norme DCP précitée.

En outre, l'étiquette comporte également un numéro de port UDP où transmettre les requêtes de réémission de paquets dont la discontinuité de transmission a été révélée. Ce numéro de port désigné PORT sur la figure 4a peut être codé sur 16 bits par exemple.

L'étiquette comporte en outre un champ d'adresse IP où transmettre les requêtes de réémission de paquets. Cette adresse désignée IP serveur peut être codée sur 32 bits et correspond à l'adresse IP où envoyer les requêtes de réémission de paquets. Cette adresse peut être différente de celle du serveur S d'où vient le flux.

Enfin, ainsi que représentée en figure 4a, l'étiquette précitée comporte un champ codé sur 16 bits représentant la taille de la mémoire. La taille de la mémoire peut être définie en nombre de trames disponibles. Le type de trames peut être PFT ou AF en fonction du mode de transmission choisi, conformément aux dispositions de la norme DCP.

L'utilisation d'une étiquette DCP permet de rendre le flux de données transmis compatible avec des terminaux client CT qui ne prennent pas en charge la demande de réémission des paquets perdus.

Afin d'accroitre l'efficacité de mise en oeuvre du procédé, bien entendu du serveur S et de tout terminal CT conformes à l'objet de l'invention, la signalisation dans le flux peut avantageusement contenir la taille mémoire de la mémoire utilisée côté serveur S. Ceci permet d'éviter les demandes de répétition de données qui ne sont plus présentes dans la mémoire. On comprend, en particulier, qu'à partir d'une taille de mémoire sensiblement identique dans l'une et l'autre des mémoires mettant en oeuvre les étapes C et E du procédé tel que représenté en figure 1, il est possible ainsi de discriminer les paquets $P_k$ et bien entendu leur index de continuité qui ne sont plus présents dans la mémoire.

Enfin, afin de limiter le débit de données nécessaires à la mise en oeuvre du procédé objet de l'invention, ces informations peuvent ne pas être présentes dans chaque paquet de flux. Toutefois, et conformément à un aspect remarquable du procédé objet de l'invention, ces données sont alors présentes à une fréquence suffisante pour que le terminal client CT puisse rapidement les utiliser.

Dans une variante de mise en oeuvre, le même processus peut être appliqué au protocole RTP/IP. Les informations envoyées par le serveur pour permettre aux clients d'effectuer des demandes de répétition seront incluses dans les entêtes RTP au format prévu par ce protocole. Les informations à inclure sont :

- l'adresse IP et le port où adresser les demandes de répétitions
- La taille de la FIFO du coté serveur

L'indice de continuité utilisé du coté client pour détecter les ruptures est le champ « sequence number »sur 16 bits, de l'entête RTP comme prévu dans la norme.

L'identification des paquets à répéter est effectuée en utilisant le champ « sequence number » de l'entête RTP. Les messages de demande de répétition adressés du terminal client au terminal serveur contiennent alors donc les données suivantes :

- L'adresse IP et le port où devront être envoyés les paquets à répéter
- l'identifiant du premier paquet de la rupture : valeur sur 16 bits du champ « sequence number ».
  le nombre de paquets perdus dans la rupture (codé sur 16 bits)

De même, une description plus détaillée d'une requête de réémission de paquets RR ($C_k$r, @CT) sera main-

tenant donnée en liaison avec la figure 4b.

En référence à la figure précitée, toute requête de réémission de paquets transmise par un terminal client CT vers un serveur de transmission S de données par paquets en réseau IP conforme à l'objet de l'invention, est remarquable en ce qu'une telle requête contient au moins une identification du ou des paquets de données à réémettre, en particulier l'index de continuité du premier paquet perdu , lorsque, en particulier, cet index est calculé à partir de la fonction monotone croissante précédemment mentionnée dans la description, le nombre de paquets à répéter à partir de cet index et, bien entendu, l'adresse où doit être renvoyé le ou les paquets considérés, c'est-à-dire l'adresse CT du terminal client qui demande la répétition.

Il est bien entendu toutefois que les champs précédemment mentionnés de la requête de réémission ne sont pas les seuls, le procédé, le serveur S et le terminal client CT objets de la présente invention, pouvant être mis en oeuvre de manière particulièrement avantageuse dans les conditions ci-après.

En effet, la source de réémission de paquets peut être différente du serveur S initial.

Par exemple, dans le cas d'une diffusion monodirectionnelle du flux, telle que celle réalisée par un satellite ou autre par exemple, il est possible de spécifier l'adresse d'un serveur secondaire sur le réseau, lequel est alors chargé de distribuer les trames perdues par exemple via une liaison par réseau téléphonique commuté RTC, réseau numérique à intégration de services RNIS ou finalement tout type de réseau par exemple.

Le terminal client CT, lorsque ce dernier a détecté la perte d'un ou plusieurs paquets $P_k r$, doit alors envoyer une demande de répétition au serveur S.

Cette demande ou requête de répétition doit alors contenir au moins les deux types d'information précités et le paquet peut être structuré de la manière ci-après :

- paquet ou étiquette : nom de l'étiquette, nom de l'étiquette codé sur 4 octets par exemple et dans le cas de la figure 4b, AREP à titre d'exemple non limitatif ;
- longueur du paquet : le paquet a une longueur variable 80, 104 ou 132 bits en fonction du mode de transmission choisi ;
- PORT : codé sur 16 bits, numéro du port où la répétition devra être effectuée ;
- IP client : codé sur 32 bits, numéro IP où la répétition devra être effectuée, c'est-à-dire en définitive adresse @CT du terminal client ;
- PFT : champ codé sur 1 bit, drapeau utilisé pour signaler que le mode PFT avec fragmentation est utilisé et que le champ F index est donc présent ;
- champ d'adresse Adr : codé sur 1 bit, drapeau utilisé pour signaler que l'adressage est utilisé et que le champ PFT destinataire et PFT Dest sont présents. Cette option n'est utilisable que si le champ PFT est valide, valeur du drapeau PFT = 1 l'adressage étant lié au PFT;
- champ de nombre de fragments NbFrag codé sur 14 bits AF ou PF en fonction du mode à répéter à partir de l'index de continuité défini par les champs SEQ et Findex. Par exemple, si le nombre de fragments NbFrag = 3 et si $P_S EQ$ = 50 les paquets $P_k$ de rang k = 50, 51 à 52 doivent être répétés ;
- champ SEQ codé sur 16 bits, ce champ correspond au champ SEQ du paquet AF à répéter si le champ PFT est à la valeur 0. Si le Champ PFT est à la valeur 1, le champ SEQ correspond au champ $P_S EQ$ du paquet PF à répéter. Le champ SEQ est donc une partie utilisée pour l'identification du flux contenant les paquets à répéter ;
- champ Findex : champ codé sur 24 bits. Ce champ est optionnel. Il n'est présent que si le champ PFT est à la valeur 1. Ce champ contient la valeur du champ Findex du paquet PF à répéter. Il est utilisé pour l'identification du premier paquet à répéter ;
- PFT Dest : champ codé sur 16 bits. Ce champ est également optionnel. Il n'est présent que si le champ Adr est égal à 1. Le champ PFT Dest contient la valeur du champ Dest de l'adressage PFT du paquet à répéter. Ce champ est utilisé pour l'identification du premier paquet à répéter ;
- champ PFT Src codé sur 16 bits. Ce champ est optionnel. Il n'est présent que si le champ Adr est à la valeur 1. Le champ PFT Src contient la valeur du champ Src de l'adressage PFT du paquet à répéter. Ce champ est utilisé pour l'identification du premier paquet à répéter.

Enfin, l'invention couvre un programme d'ordinateur codé de manière monolithique ou modulaire et mémorisé sur un support de mémorisation d'un ordinateur ou d'un appareil dédié constitutif d'un serveur de transmission/réception de données par paquets en réseau IP entre ce serveur et un terminal client.

Le programme d'ordinateur objet de l'invention, est remarquable en ce que, lors de son exécution ce programme d'ordinateur exécute les étapes d'affectation à chaque paquet à transmettre d'un index de continuité d'émission et de transmission successive de chacun des paquets et de leur index de continuité vers le terminal client, ainsi que décrit précédemment dans la description en liaison avec la figure 1.

L'invention couvre également un programme d'ordinateur codé sous forme monolithique ou modulaire et mémorisé sur un support de mémorisation d'un ordinateur constitutif d'un terminal client de transmission/réception de données par paquets en réseau IP entre ce terminal client et un serveur.

Ce programme d'ordinateur est remarquable en ce que, lors de son exécution, ce programme d'ordinateur exécute les étapes de détection de toute rupture de continuité de flux de paquets reçus à partir des index de continuité associés à chaque paquet reçu, et, sur détection d'une discontinuité de flux, la transmission du terminal client au serveur précité d'au moins une requête de réémission d'au moins un paquet manquant, tant que ce ou ces paquets manquants ne sont pas reçus par le terminal client.

**Revendications**

1. Procédé de transmission/réception en temps réel de données par paquets en réseau IP entre un serveur et un terminal client, **caractérisé en ce qu'**il consiste au moins à,
   côté serveur :

   - affecter (A) à chaque paquet à transmettre un index de continuité d'émission ;
   - transmettre (B) successivement chacun des paquets selon le protocole UDP et leur index de continuité selon le protocole DCP vers ledit terminal client ; et,

   côté terminal client :

   - détecter (G) toute rupture de continuité de flux de paquets reçus à partir des index de continuité associés à chaque paquet reçu ; et, sur détection d'une discontinuité de flux,
   - transmettre (L) du terminal client au serveur au moins une requête de réémission d'au moins un paquet manquant, tant que ledit au moins un paquet manquant n'a pas été reçu par ledit terminal client.

2. Procédé selon la revendication 1, **caractérisé en ce qu'**il consiste en outre, côté terminal client et serveur à mémoriser (C) en continu une même pluralité de paquets successifs à transmettre respectivement reçus, accompagnés de leur index de continuité.

3. Procédé selon la revendication 1 ou 2, **caractérisé en ce que** l'étape de détection de toute rupture de continuité est effectuée par analyse du seul flux DCP.

4. Procédé selon l'une des revendications 2 à 3, **caractérisé en ce que** ladite étape consistant à mémoriser en continu consiste à mémoriser chaque paquet de ladite pluralité de paquets successifs dans une mémoire.

5. Procédé selon la revendication 4, **caractérisé en ce que** la taille de ladite mémoire en nombre de paquets est fonction des paramètres de transmission du réseau de transmission des paquets.

6. Procédé selon la revendication 5, **caractérisé en ce que** la taille de ladite mémoire est adaptative, ce qui permet d'optimiser la compensation de ruptures de transmission au temps de transmission aller-retour près entre le terminal client et le serveur.

7. Procédé selon l'une des revendications 1 à 6, **caractérisé en ce que** la transmission desdits index de continuité est effectuée par transmission à intervalle déterminé d'une étiquette DCP, contenant les informations incluant au moins l'adresse de destination de toute requête de réémission de paquets, la taille de la mémoire de mémorisation de ladite pluralité de paquets successifs.

8. Procédé selon l'une des revendications 1 à 7, **caractérisé en ce que** ladite étape consistant à transmettre du terminal client au serveur une requête de réémission d'au moins un paquet est exécutée selon le protocole UDP/IP.

9. Procédé selon la revendication 8, **caractérisé en ce que** chaque requête de réémission inclut au moins :

   - l'identifiant du ou des paquets à réémettre ;
   - l'adresse de destination du ou des paquets à réémettre.

10. Procédé selon l'une des revendications 1 à 9, **caractérisé en ce que** l'étape consistant à transmettre successivement chacun des paquets est effectuée par transmission en mode unicast ou multicast.

**11.** Serveur de transmission/réception de données par paquets en réseau IP entre ce serveur et un terminal client, **caractérisé en ce que** ledit serveur comporte au moins, outre des moyens d'émission de paquets de données constitutifs d'au moins un flux d'émission selon le protocole UDP,

- des moyens ($M_1$) générateurs et de transmission d'un index de continuité d'émission pour chaque paquet à émettre ;
- des moyens de mémorisation ($M_{2x}$) d'une suite d'un nombre de paquets de données successifs envoyés pour au moins un flux de données transmises, lesdits moyens de mémorisation étant constitués par une mémoire dont la taille définit la capacité de réémission du serveur en nombre de paquets de données et en durée de réémission ;
- des moyens de réception et de traitement ($M_3$) de requêtes de réémission de paquets de données encore présents dans les moyens de mémorisation de la suite d'un nombre de paquets de données successifs, lesdits moyens de réception et de traitement commandant lesdits moyens d'émission en mode unicast ou multicast et lesdits moyens générateurs et de transmission des index de continuité en mode DCP.

**12.** Terminal client adapté pour la transmission/réception de flux de données par paquets en réseau IP selon le protocole UDP, accompagnées d'index de continuité de flux selon le protocole DCP, émis par un serveur, **caractérisé en ce que** ledit terminal client comporte en outre :

- des moyens de détection ($M'_1$) des ruptures de flux par analyse des index de continuité ;
- des moyens de mémorisation ($M'_{2x}$) d'une suite d'un nombre de paquets de données successifs reçus pour au moins un flux de données ;
- des moyens de transmission ($M'_3$) de requêtes de réémission de paquets de données à une adresse spécifique, lesdits moyens de transmission de requêtes de réémission opérant selon le protocole UDP/IP ;
- des moyens de réordonnancement ($M'_4$) des paquets reçus dans lesdits moyens de mémorisation d'une suite d'un nombre de paquets de données successifs reçus, compte tenu des paquets transmis en réémission.

**13.** Programme d'ordinateur mémorisé sur un support de mémorisation d'un ordinateur ou d'un appareil dédié constitutif d'un serveur de transmission/réception de données par paquets en réseau IP entre ce serveur et un terminal client, **caractérisé en ce que**, lors de l'exécution de ses instructions, ledit programme d'ordinateur exécute les étapes d'affectation à chaque paquet à transmettre d'un index de continuité d'émission et de transmission successive de chacun des paquets selon le protocole UDP et de leur index de continuité selon le protocole DCP vers ce terminal client selon l'une des revendications 1 à 10.

**14.** Programme d'ordinateur mémorisé sur un support de mémorisation d'un ordinateur constitutif d'un terminal client de transmission/réception de données par paquets en réseau IP transmis selon le protocole UDP entre ce terminal client et un serveur, **caractérisé en ce que**, lors de son exécution, ledit programme d'ordinateur exécute les étapes de détection de toute rupture de continuité de flux de paquets reçus à partir de leur index de continuité reçu selon le protocole DCP, et, sur détection d'une discontinuité de flux, la transmission du terminal client audit serveur d'au moins une requête de réémission d'au moins un paquet manquant, tant que ce ou ces paquets manquants ne sont pas reçus par ce terminal client.

**Patentansprüche**

**1.** Verfahren für Echtzeit-Übertragung/-Empfang von Daten in Paketen in einem IP-Netz zwischen einem Server und einem Client-Endgerät, **dadurch gekennzeichnet, dass** es zumindest in Folgendem besteht:

auf der Serverseite:

- dem Zuweisen (A) eines Ausgabekontinuitätsindex für jedes zu übertragende Paket;
- dem sukzessiven Übertragen (B) jedes der Pakete nach dem UDP-Protokoll und ihres Kontinuitätsindex nach dem DCP-Protokoll an das Client-Endgerät; und

auf der Client-Endgerät-Seite:

- dem Erfassen (G) jeder Unterbrechung der Kontinuität des Stroms empfangener Pakete anhand der jedem empfangenen Paket zugeordneten Kontinuitätsindizes; und, bei Erfassung einer Stromdiskontinuität,

- dem Übertragen (L) - vom Client-Endgerät an den Server - einer Aufforderung zur Neuausgabe zumindest eines fehlenden Pakets, solange das zumindest eine fehlende Paket nicht vom Client-Endgerät empfangen wurde.

2. Verfahren nach Anspruch 1, **dadurch gekennzeichnet, dass** es ferner auf der Seite des Client-Endgeräts und des Servers im kontinuierlichen Speichern (C) einer gleichen Vielzahl an jeweils empfangenen zu übertragenden aufeinanderfolgenden Paketen mit ihrem Kontinuitätsindex besteht.

3. Verfahren nach Anspruch 1 oder 2, **dadurch gekennzeichnet, dass** der Schritt der Erfassung jeglicher Unterbrechung der Kontinuität durch Analyse allein des DCP-Stroms erfolgt.

4. Verfahren nach einem der Ansprüche 2 bis 3, **dadurch gekennzeichnet, dass** der Schritt des kontinuierlichen Speicherns darin besteht, jedes Paket der Vielzahl aufeinanderfolgender Pakete in einem Speicher zu speichern.

5. Verfahren nach Anspruch 4, **dadurch gekennzeichnet, dass** die Größe des Speichers einer Anzahl an Paketen von den Übertragungsparametern des Übertragungsnetzes der Pakete abhängt.

6. Verfahren nach Anspruch 5, **dadurch gekennzeichnet, dass** die Größe des Speichers anpassbar ist, was die Optimierung der Kompensation von Übertragungsunterbrechungen etwa auf die Hin - und Rückübertragungszeit zwischen dem Client-Endgerät und dem Server ermöglicht.

7. Verfahren nach einem der Ansprüche 1 bis 6, **dadurch gekennzeichnet, dass** die Übertragung der Kontinuitätsindizes durch Übertragung - in einem bestimmten Intervall - eines DCP-Etiketts erfolgt, das die Informationen enthält, die zumindest die Zieladresse der gesamten Aufforderung zur Neuausgabe von Paketen, die Größe des Speichers zur Speicherung der Vielzahl aufeinanderfolgender Pakete beinhalten.

8. Verfahren nach einem der Ansprüche 1 bis 7, **dadurch gekennzeichnet, dass** der Schritt des Übertragens - vom Client-Endgerät an den Server - einer Aufforderung zur Neuausgabe zumindest eines Pakets nach dem UDP/IP-Protokoll ausgeführt wird.

9. Verfahren nach Anspruch 8, **dadurch gekennzeichnet, dass** jede Aufforderung zur Neuausgabe zumindest Folgendes beinhaltet:

 - den Identifikator des bzw. der neu auszugebenden Pakete;
 - die Zieladresse des bzw. der neu auszugebenden Pakete.

10. Verfahren nach einem der Ansprüche 1 bis 9, **dadurch gekennzeichnet, dass** der Schritt des sukzessiven Übertragens jedes der Pakete durch Übertragung im Unicast - oder Multicast-Modus erfolgt.

11. Server für Übertragung/Empfang von Daten in Paketen in einem IP-Netzwerk zwischen diesem Server und einem Client-Endgerät, **dadurch gekennzeichnet, dass** der Server neben Mitteln zur Ausgabe von Datenpaketen, die zumindest einen Ausgabestrom bilden, nach dem UDP-Protokoll zumindest Folgendes umfasst:

 - Mittel ($M_1$) zur Erzeugung und Übertragung eines Ausgabekontinuitätsindex für jedes auszugebende Paket;
 - Mittel ($M_{2X}$) zur Speicherung einer Folge einer Anzahl aufeinanderfolgender Datenpakete, die für zumindest einen Strom übertragener Daten gesendet wurden, wobei die Mittel zur Speicherung durch einen Speicher ausgebildet sind, dessen Größe die Kapazität der Neuausgabe des Servers hinsichtlich der Anzahl an Datenpakten und der Dauer der Neuausgabe definiert;
 - Mittel ($M_3$) zum Empfang und zur Bearbeitung von Aufforderungen zur Neuausgabe von Datenpaketen, die noch in den Mitteln zur Speicherung der Folge einer Anzahl aufeinanderfolgender Datenpakete vorhanden sind, wobei die Mittel zum Empfang und zur Bearbeitung die Mittel zur Ausgabe im Unicast - oder Multicast-Modus sowie die Mittel zur Erzeugung und Übertragung der Kontinuitätsindizes im DCP-Modus steuern.

12. Client-Endgerät für Übertragung/Empfang von Datenströmen in Paketen in einem IP-Netzwerk nach dem UDP-Protokoll, die von Stromkontinuitätsindizes nach dem DCP-Protokoll begleitet sind, die von einem Server ausgegeben werden, **dadurch gekennzeichnet, dass** das Client-Endgerät ferner Folgendes aufweist:

 - Mittel ($M'_1$) zur Erfassung von Stromunterbrechungen durch Analyse der Kontinuitätsindizes;

- Mittel (M'$_{2x}$) zur Speicherung einer Folge einer Anzahl aufeinanderfolgender Datenpakete, die für zumindest einen Datenstrom empfangen wurden;
- Mittel (M'$_3$) zur Übertragung von Aufforderungen zur Neuausgabe von Datenpaketen an eine bestimmte Adresse, wobei die Mittel zur Übertragung von Aufforderungen zur Neuausgabe nach dem UDP/IP-Protokoll arbeiten;
- Mittel (M'$_4$) zur Neuordnung der Pakete, die in den Mitteln zur Speicherung einer Folge einer Anzahl aufeinanderfolgender Datenpakete empfangen wurden, unter Berücksichtigung der als Neuausgabe übertragenen Pakete.

13. Computerprogramm, das auf einem Speicherträger eines Computers oder eines bestimmten Geräts gespeichert ist, welches einen Server für Übertragung/Empfang von Daten in Paketen in einem IP-Netzwerk zwischen diesem Server und einem Client-Endgerät bildet, **dadurch gekennzeichnet, dass** das Computerprogramm während der Ausführung seiner Anweisungen die Schritte der Zuweisung eines Ausgabekontinuitätsindex zu jedem zu übertragenden Paket und der sukzessiven Übertragung jedes der Pakete nach dem UDP-Protokoll und ihres Kontinuitätsindex nach dem DCP-Protokoll an dieses Client-Endgerät nach einem der Ansprüche 1 bis 10 ausführt.

14. Computerprogramm, das auf einem Speicherträger eines Computers gespeichert ist, der ein Client-Endgerät für Übertragung/Empfang von Daten in Paketen in einem IP-Netzwerk bildet, die nach dem UDP-Protokoll zwischen diesem Client-Endgerät und einem Server übertragen werden, **dadurch gekennzeichnet, dass** das Computerprogramm während seiner Ausführung die Schritte der Erfassung jeglicher Unterbrechung der Kontinuität des Stroms empfangener Pakete anhand ihres empfangenen, nach dem DCP-Protokoll übertragenen Kontinuitätsindex und, bei Erfassung einer Diskontinuität des Stroms, der Übertragung - vom Client-Endgerät an den Server - zumindest einer Aufforderung zur Neuausgabe zumindest eines fehlenden Pakets, solange das bzw. die fehlenden Pakete nicht von diesem Client-Endgerät empfangen wurden, ausführt.

**Claims**

1. Method for the real-time transmission/reception of data in packets in an IP network between a server and a client terminal, **characterized in that** it consists at least of,
   on the server side:

   - assigning (A) a transmission continuity index to each packet to be transmitted;
   - successively transmitting (B) each of the packets according to the UDP protocol and their continuity index according to the DCP or RTP protocol to said client terminal; and,

   on the client terminal side:

   - detecting (G) any break in the continuity of the stream of packets received on the basis of the continuity indices associated with each packet received; and, on detection of a stream discontinuity,
   - transmitting (L), from the client terminal to the server, at least one request for the retransmission of at least one missing packet, for as long as said at least one missing packet has not been received by said client terminal.

2. Method according to claim 1, **characterized in that** it consists moreover, on the client terminal and server side, of continuously storing (C) a same plurality of successive packets, to be transmitted and received respectively, accompanied by their continuity index.

3. Method according to claim 1 or 2, **characterized in that** the step of detection of any continuity break is carried out by analysis of the DCP stream alone.

4. Method according to one of the claims 2 to 3, **characterized in that** said step consisting of continuously storing consists of storing each packet of said plurality of successive packets in a memory.

5. Method according to claim 4, **characterized in that** the size of said memory in number of packets is a function of the transmission parameters of the transmission network of the packets.

6. Method according to claim 5, **characterized in that** the size of said memory is adaptive, which makes it possible to optimize the compensation of transmission breaks to within the forward and return transmission time between the client terminal and the server.

7.  Method according to one of the claims 1 to 6, **characterized in that** the transmission of said continuity indices is carried out by transmission at specified intervals of a DCP tag containing information including at least the destination address of any request for the retransmission of packets and the size of the memory for storing said plurality of successive packets.

8.  Method according to one of claims 1 to 7, **characterized in that** said step consisting of transmitting, from client terminal to the server, a request for the retransmission of at least one packet is executed according to the UDP/IP protocol.

9.  Method according to claim 8, **characterized in that** each retransmission request includes at least:

    - the identifier of the packet or packets to be retransmitted;
    - the destination address of the packet or packets to be retransmitted.

10. Method according to one of the claims 1 to 9, **characterized in that** the step consisting of successively transmitting each of the packets is carried out by transmission in unicast or multicast mode.

11. Server for the transmission/reception of data in packets in an IP network, between this server and a client terminal, **characterized in that** said server comprises at least, in addition to the means for transmitting data packets constitutive of at least one transmission stream according to the UDP protocol,

    - means ($M_1$) for generating and transmitting of a transmission continuity index for each packet to be transmitted;
    - means ($M_{2x}$) of storage of a series of a number of successive data packets sent for at least one stream of transmitted data, said storage means being constituted by a memory whose size defines the retransmission capability of the server in number of data packets and in duration of retransmission;
    - means ($M_3$) of reception and processing requests for retransmission of data packets still present in the means of storage of the series of a number of successive data packets, said reception and processing means controlling said means of transmission in unicast or multicast mode and said means of generating and transmitting continuity indices in DCP mode.

12. Client terminal adapted for the transmission/reception of streams of data in packets in an IP network according to the UDP protocol, accompanied by stream continuity indices according to the DCP protocol, transmitted by a server, **characterized in that** said client terminal comprises moreover:

    - means ($M'_1$) of detection of the stream breaks by analysis of the continuity indices;
    - means ($M'_{2x}$) of storage of a series of a number of successive data packets received for at least one data stream;
    - means ($M'_3$) of transmission of requests for the retransmission of data packets to a specific address, said means of transmission of retransmission requests operating according to the UDP/IP protocol;
    - means ($M'_4$) of resequencing the packets received in said means of storage of a series of a number of successive data packets received, taking account of the packets transmitted by retransmission.

13. Computer program stored on a storage medium of a computer or a dedicated device constitutive of a server for the transmission/reception of data in packets in an IP network between this server and a client terminal, **characterized in that**, during the execution of its instructions, said computer program executes the steps of assignment of a transmission continuity index to each packet to be transmitted and of successive transmission of each of the packets according to the UDP protocol and their continuity indices according to the DCP protocol to this client terminal according to one of claims 1 to 10.

14. Computer program stored on a storage medium of a computer constitutive of a client terminal for the transmission/reception of data in packets in an IP network transmitted according to the UDP protocol between this client terminal and a server, **characterized in that**, during its execution, said computer program executes the steps of detection of any break in continuity of the stream of packets received on the basis of their received continuity index according to the DCP, and, on detection of a stream discontinuity, the transmission from the client terminal to said server of at least one request for retransmission of at least one missing packet, as long as this or these missing packets have not been received by this client terminal.

# FIG.1.

Start: S@S, CT@CT

A: $P_K \longrightarrow C_K, P_K$

MÉMORISATION

C: MÉMORISATION $\{P_K, C_K\}_{K=N-X}^{K=N-1}$ FIFO

RÉÉMISSION

L: RÉÉMISSION À PARTIR DE LA FIFO

D: $C_{N-1} \geq C_K \geq C_{N-X}$

B: $S \xrightarrow{DCP(C_K), UDP(P_K)} CT$

G: $C_K + 1 \neq C_{K+1} \wedge C_K \in (CP_K \setminus CR_K)$

H: TRANSMISSION $RR(C_{KR}, @CT)$

J: $(C_K < C_{N-X}) \vee (C_K \in CR_K)$

K: DESTRUCTION DU PAQUET

E: RÉORDONNANCEMENT ET MÉMORISATION $\{R_K, C_K\}_{K=N-X}^{K=N-1}$ FIFO

F: SUITE TRAITEMENT RK

FIG.2a.

$RR(C_{kr}, @CT)$

$M_3$

GESTIONNAIRE DE RÉPÉTITION DE PAQUETS

$RR(C_{kr}, @CT)$

RÉPÉTITION DES PAQUETS

$P_{kr}$

$M_{2x}$ TAMPON CONTENANT LES X PAQUETS DÉJÀ ÉMIS

| N-X | | N-3 | N-2 | N-1 |
|-----|-----|-----|-----|-----|

PAQUET À TRANSMETTRE : N

ENVOÍ DES PAQUETS AUX CLIENTS

@CT

FIG.2b.

FIG.3a.

CT

FIG.3b.

DEMANDES DE RÉPÉTITIONS

ANALYSE DE LA CONTINUITÉ

RÉCEPTION DU PAQUET N

FIG.4a.

| AUDP | 64 | PORT | IP SERVEUR | T.FIFO |
|---|---|---|---|---|
| 32 BITS | 32 BITS | 16 BITS | 32 BITS | 16 BITS |

FIG.4b.

| AREP | Tag Long | PORT | IP CLIENT | PFT | Addr | N Frag | SEQ | FINDEX | PFT Dest | PFT Src |
|---|---|---|---|---|---|---|---|---|---|---|
| 32 BITS | 32 BITS | 16 BITS | 32 BITS | 1 BIT | 1 BIT | 14 BITS | 16 BITS | 24 BITS | 16 BITS | 16 BITS |

Si PFT=1

Si Addr=1

**EP 2 119 141 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2004186737 A
- EP 1211856 A

**Littérature non-brevet citée dans la description**

- TCP : Transmission Control Protocol. *RFC 793,* Septembre 1981
- User Datagram Protocol. *RDC 768,* Août 1980
- RTP : A Transport Protocol for Real Time Applications. *STD 64, RFC 3550,* Juillet 2003
- RTP: A Transport Protocol for Real-Time Applications. *RFC 1889,* Janvier 1996